# EUROPEAN PATENT SPECIFICATION

(11) **EP 3 335 540 B1**
(45) Date of publication and mention of the grant of the patent: **29.05.2019**
(21) Application number: 17205624.4
(22) Date of filing: 06.12.2017
(51) Int. Cl.: A01D 34/82

(54) **LAWNMOWER WITH ANTI-VIBRATION FIXING MEANS**
RASENMÄHER MIT SCHWINGUNGSDÄMPFENDEN BEFESTIGUNGSMITTELN
TONDEUSE À GAZON PRÉSENTANT DES MOYENS DE FIXATION ANTI-VIBRATION

(30) Priority: 13.12.2016 IT 201600125705
(43) Date of publication of application: 20.06.2018
(73) Proprietor: Stiga S.p.A. in breve anche St. S.p.A., 31033 Castelfranco Veneto (TV) (IT)
(72) Inventor: BACCHIN, Gian Luca, 31033 CASTELFRANCO VENETO (TV) (IT); FORRER, Michael, 8472 SEUZACH (CH)
(74) Representative: Mittler, Andrea

(56) References cited:
- EP-A1- 0 268 571
- EP-A1- 1 570 721
- DE-A1- 2 337 721
- FR-A1- 2 399 200
- FR-A1- 2 419 002

## Description

The present invention relates to a lawnmower with anti-vibration fixing means.

In the background art, FR-2419002-A1 describes an anti-vibration apparatus between the motor and the deck comprising pins passing through a metal or plastic ring on which anti-vibration isolation means are mounted, their shapes may include truncated sleeves in rubber around the pins and rubber pads of various shapes which may be connected to metal bases.

DE-2708483-A1 describes a vibration isolation disc between the motor and the deck.

EP-1570721-B1 describes a motor mounted on the deck by means of an insulation ring in damping material.

EP-268571-B1 describes an anti-vibration apparatus comprising pins in elastic material for connecting a mounting ring of a motor with a deck of a lawnmower.

SE-500513 of the Applicant describes an anti-vibration system with housing sleeves resting between a deck and means for supporting a motor, in which said housing sleeves are engaged from below in flanges of through openings of the means for supporting the motor.

Disadvantageously, the existing anti-vibration systems of the background art are not capable of dampening vibrations simultaneously originating from different directions and are unable to dampen them simultaneously, they have high response times which do not allow to dampen rapid vibrations, they are easily broken and comprise several parts which may break and are difficult to mount, making the assembly of the lawnmower complicated.

It is the object of the present invention to provide a lawnmower with more simple anti-vibration fixing means, which is capable of dampening vibrations simultaneously originating from different directions, with much shorter response times, so as to allow the dampening of rapid vibrations originating from different directions, which is easily assembled, which is more solid and lasting.

In accordance with the invention such object is achieved by a lawnmower comprising a motor, a cutting blade and a deck, said motor is suitable for putting said cutting blade in motion, said motor is integrally mounted with means for supporting the motor of the lawnmower, said means for supporting the motor are mounted on the deck by means of a multiplicity of anti-vibration fixing means of the lawnmower, said multiplicity of anti-vibration fixing means are adapted to support said means for supporting the motor, said means for supporting the motor comprise a multiplicity of upper through openings, said deck comprises a multiplicity of lower through openings arranged below and at said multiplicity of upper through openings of said means for supporting the motor, each anti-vibration fixing means of said multiplicity of anti-vibration fixing means is adapted to pass through one upper through opening of said multiplicity of upper through openings and through one lower through opening of said multiplicity of lower openings, each anti-vibration fixing means comprises engagement means and a damping viscoelastic element, said engagement means comprise a head and a pin pointing downwards, said damping viscoelastic element comprises a through opening adapted to allow said pin of the engagement means to pass through, said pin of the engagement means is adapted to pass through said lower through opening of the deck, said upper through opening of the means for supporting the motor comprises a flange pointing downwards, said damping viscoelastic element is adapted to be engaged with said flange of the means for supporting the motor, said damping viscoelastic element comprises a base portion which contrasts with said deck so that said damping viscoelastic element is adapted to support said means for supporting the motor resting on said deck, characterized in that said damping viscoelastic element comprises an upper portion extending upward above the through opening of the means for supporting the motor, said upper portion of the damping viscoelastic element climbs over the flange of the through opening of the means for supporting the motor defining an outer diameter of the upper portion of the damping viscoelastic element larger than the diameter of the upper through opening of the means for supporting the motor, said upper portion of the damping viscoelastic element comprises an upper through opening adapted to allow the pin of the engagement means to pass through and an upper elastic membrane adapted to serve as abutment for the head of the engagement means, said damping viscoelastic element comprises at least one upper cavity arranged below the upper elastic membrane, said upper elastic membrane is adapted to be deformed vertically along a vertical axis passing from at least one first vertical position to at least one second vertical position of a multiplicity of vertical positions in which said upper elastic membrane oscillates deforming the upper cavity dampening vertical vibrations, said upper elastic membrane is adapted to be deformed transversely with respect to the vertical axis passing from at least one first transversal position to at least one second transversal position of a multiplicity of transversal positions in which said upper elastic membrane oscillates deforming the upper cavity about the vertical axis dampening transversal vibrations.

These and other features of the present invention will become more apparent from the following detailed description of a practical embodiment thereof, shown for non-limiting purposes, in the accompanying drawings, in which:
Figure 1 shows a top view of a detail of a lawnmower according to the present invention and shows means for supporting a motor mounting three anti-vibration fixing means at suitable angles from one another;
Figure 2 shows a sectional view according to the line II-II of Figure 1 of one of the anti-vibration fixing means;
Figure 3 shows a view excerpted from Figure 2 of a damping viscoelastic element of the anti-vibration fixing means.

With reference to the Figures listed above, a lawnmower is noted comprising a motor, a cutting blade and a deck 100. Said motor is adapted to put in motion said cutting blade. Said motor is mounted integrally with means for supporting the motor 200 of the lawnmower.

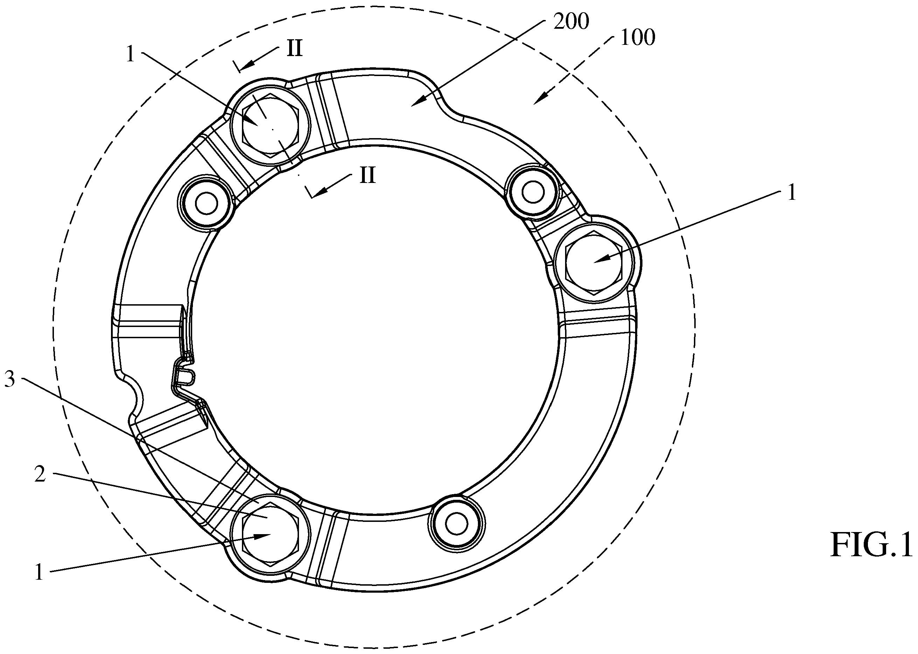

As shown in Figure 1 said means for supporting the motor 200 are mounted on the deck 100 by means of a multiplicity of anti-vibration fixing means 1 of the lawnmower.

Said multiplicity of anti-vibration fixing means 1 are adapted to support said means for supporting the motor 200.

The anti-vibration fixing means 1 are at least three and are arranged at suitable angles from one another on a geometric plane identified by the means for supporting the motor 200. The means for supporting the motor are in the shape of a ring. For example, it may be provided that said at least three anti-vibration fixing means are arranged at 120 sexagesimal degrees from one another on the geometric plane identified by the means for supporting the motor 200.

Said means for supporting the motor 200 comprises a multiplicity of upper through openings 201.

Said deck 100 of the lawnmower comprises a multiplicity of lower through openings 101 arranged below and at said multiplicity of upper through openings 201 of said means for supporting the motor 200.

Each anti-vibration fixing means 1 of said multiplicity of anti-vibration fixing means 1 is adapted to pass through an upper through opening 201 of said multiplicity of upper through openings 201 and through a lower through opening 101 of said multiplicity of lower openings 101.

Each upper through opening 201 is at each lower through opening 101.

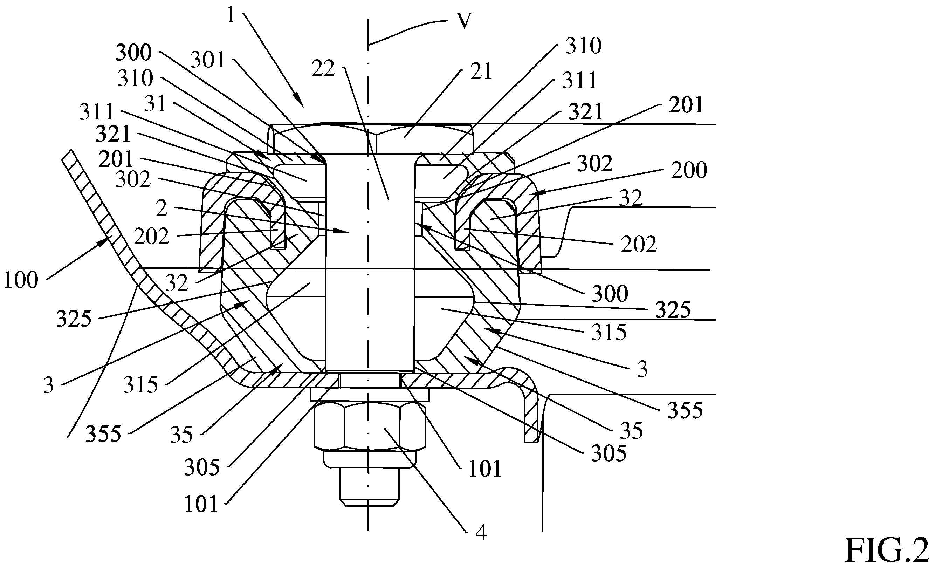

As shown in Figure 2, each anti-vibration fixing means 1 comprises engagement means 2 and a damping viscoelastic element 3 made of a suitable material, such as, for example, an elastic material or a material adapted to deform for compression or stretching forces and adapted to return to the starting shape once the forces are no longer applied. The damping viscoelastic element 3 is in the shape of a sleeve adapted to house the engagement means 2.

Said engagement means 2 comprise a head 21 and a pin 22 pointing downwards along a vertical axis V.

Said damping viscoelastic element 3 comprises a through opening 300 adapted to allow said pin 22 of the engagement means 2 to pass through.

Said pin 22 of the engagement means 2 is adapted to pass through said lower through opening 101 of the deck 100 to connect the means for supporting the motor 200 to the deck 100.

At least one nut 4 is provided which is screwed on the pin 22 and is locking said pin 22 to said deck 100 from below.

Said upper through opening 201 of the means for supporting the motor 200 comprises a flange 202 pointing downwards. The flange 202 is in a suitable shape. The flange 202 is in a circular shape with an edge pointing downwards.

Said damping viscoelastic element 3 is adapted to be engaged with said flange 202 of the means for supporting the motor 200. The flange 202 comprises a concave portion adapted to contrasts and be engaged with the damping viscoelastic element 3.

Said damping viscoelastic element 3 comprises a median portion 32 adapted to be engaged from below with said flange 202 of the means for supporting the motor 200.

Said damping viscoelastic element 3 comprises a base portion 35 which contrasts with said deck 100 so that said damping viscoelastic element 3 is adapted to support said means for supporting the motor 200 resting on said deck 100.

Said damping viscoelastic element 3 comprises an upper portion 31 extending upward above the through opening 201 of the means for supporting the motor 200.

Said upper portion 31 of the damping viscoelastic element 3 climbs over the flange 202 of the through opening 201 of the means for supporting the motor 200 defining an outer diameter of the upper portion 31 of the damping viscoelastic element 3 larger than the diameter of the upper through opening 201 of the means for supporting the motor 200. Said upper portion 31 of the damping viscoelastic element 3 comprises an upper through opening 301 adapted to allow the pin 22 of the engagement means 2 to pass through and an upper elastic membrane 310 adapted to serve as abutment for the head 21 of the engagement means 2. The head 21 rests on the upper elastic membrane 310. The head 21 supports the upper elastic membrane 310.

Said damping viscoelastic element 3 comprises at least one upper cavity 311 arranged below the upper elastic membrane 310.

Said upper elastic membrane 310 is adapted to be deformed vertically along a vertical axis V passing from at least one first vertical position to at least one second vertical position of a multiplicity of vertical positions in which said upper elastic membrane 310 oscillates deforming the upper cavity 311 dampening vertical vibrations. Said upper elastic membrane 310 is adapted to be deformed transversely with respect to the vertical axis V passing from at least one first transversal position to at least one second transversal position of a multiplicity of transversal positions in which said upper elastic membrane 310 oscillates deforming the upper cavity 311 about the vertical axis V dampening transversal vibrations.

Advantageously, the present invention is capable of dampening vibrations simultaneously originating from all directions.

Said damping viscoelastic element 3 comprises a median portion 32 comprising a median through opening 302 at said upper through opening 201 of the means for supporting the motor 200. Said median through opening 302 has a diameter larger than the pin 22 of the engagement means 2. Said median portion 32 is adapted to be engaged with said flange 202 of the means for supporting the motor 200.

Advantageously, said median through opening 302 encloses the flange 202 of said motor support 200 preventing the direct contact between the metal of the pin 22 and of the flange 202, allowing to avoid annoying noise emissions while dampening the transmission of vibrations radial with respect to the vertical axis V, allowing to obtain an improved reduction of the vibrations of the lawnmower.

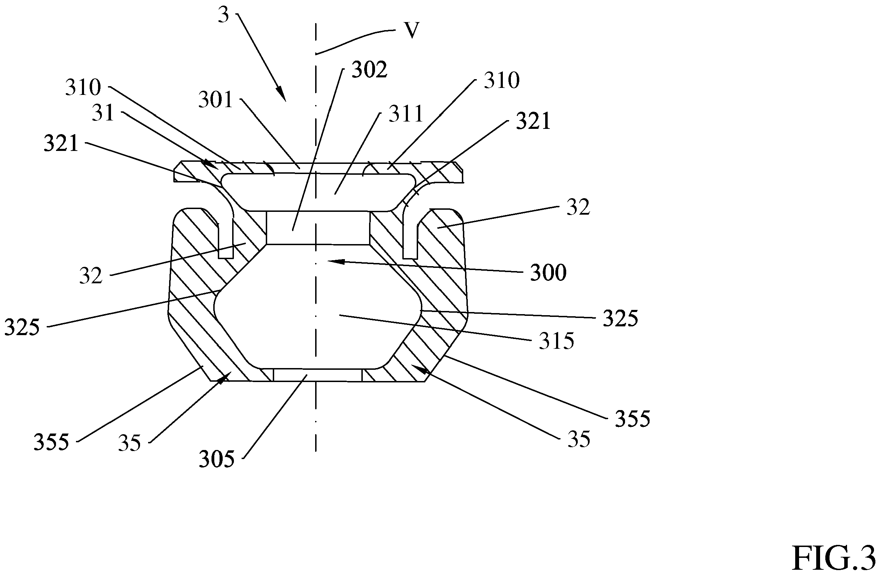

As shown in Figures 2 and 3, said upper cavity 311 is comprised between the upper through opening 301 of the damping viscoelastic element 3 and the median through opening 302 of the damping viscoelastic element 3. Said upper cavity 311 is defined by the upper elastic membrane 310 and by an upper portion of the inner wall 321 of the damping viscoelastic element 3, said upper cavity 311 communicates with the through opening 300 of the damping viscoelastic element 3.

Said base portion 35 of said damping viscoelastic element 3 comprises a lower cavity 315, said lower cavity 315 is comprised between the upper through opening 201 of the means for supporting the motor 200 and said lower through opening 101 of the deck 100.

Advantageously, a further degree of oscillation about the balance position also exists when the lawnmower is subjected to vibrations of the motor when said lower cavity 315 is adapted to be deformed vertically along the vertical axis V passing from at least one first vertical position to at least one second vertical position of a multiplicity of vertical positions in which said lower cavity 315 varies the vertical dimension thereof along the vertical axis V dampening vertical vibrations. Said lower cavity 315 is adapted to be deformed transversely with respect to the vertical axis V passing from at least one first transversal position to at least one second transversal position of a multiplicity of transversal positions in which said lower cavity 315 deforms the transversal dimension thereof and oscillates about the vertical axis V dampening transversal vibrations.

Said lower cavity 315 is comprised between the median through opening 302 of the damping viscoelastic element 3 and a lower through opening 305 of the damping viscoelastic element 3, where said lower through opening 305 of the damping viscoelastic element 3 is at the lower through opening 101 of the deck 100, said lower cavity 315 is defined on the top by the upper through opening 302 of the damping viscoelastic element 3, on the bottom by the lower through opening 305 of the damping viscoelastic element 3 and by a lower portion of the inner wall 325 of the damping viscoelastic element 3.

Said lower portion of the inner wall 325 of the damping viscoelastic element 3 has an inner diameter which narrows toward the lower through opening 101 of the deck 100, the lower portion of the inner wall 325 is adapted to be deformed vertically along the vertical axis V passing from at least one first vertical position to at least one second vertical position of a multiplicity of vertical positions in which said lower portion of the inner wall 325 varies the vertical dimension thereof along the vertical axis V dampening vertical vibrations, said lower portion of the inner wall 325 is adapted to be deformed transversely with respect to the vertical axis V passing from at least one first transversal position to at least one second transversal position of a multiplicity of transversal positions in which said lower portion of the inner wall 325 deforms the transversal dimension thereof and oscillates about the vertical axis V dampening transversal vibrations. Advantageously, the lower shape of said lower portion of the inner wall 325 allows to obtain another degree of oscillation which helps to further reduce the vibration of the lawnmower.

Said lower portion of the inner wall 325 of the damping viscoelastic element 3 has an inner diameter which narrows toward the upper through opening 201 of the means for supporting the motor 200, said lower portion of the inner wall 325 is adapted to be deformed vertically along the vertical axis V passing from at least one first vertical position to at least one second vertical position of a multiplicity of vertical positions in which said outer lower portion 355 varies the vertical dimension thereof along the vertical axis V dampening vertical vibrations, said outer lower portion 355 is adapted to be deformed transversely with respect to the vertical axis V passing from at least one first transversal position to at least one second transversal position of a multiplicity of transversal positions in which said outer lower portion 355 deforms the transversal dimension thereof and oscillates about the vertical axis V dampening transversal vibrations. Advantageously, the upper shape of said lower portion of the inner wall 325 allows to obtain another degree of oscillation which helps to further reduce the vibration of the lawnmower.

It is possible to provide, as shown in Figure 2, that an outer lower portion 355 of the base portion 35 has an outer diameter which narrows toward the lower through opening 101 of the deck 100. Said outer lower portion 355 o the base portion 35 is adapted to be deformed vertically along the vertical axis V passing from at least one first vertical position to at least one second vertical position of a multiplicity of vertical positions in which said outer lower portion 355 varies the vertical dimension thereof along the vertical axis V dampening vertical vibrations, said outer lower portion 355 is adapted to be deformed transversely with respect to the vertical axis V passing from at least one first transversal position to at least one second transversal position of a multiplicity of transversal positions in which said outer lower portion 355 deforms the transversal dimension thereof and oscillates about the vertical axis V dampening transversal vibrations. Advantageously, the shape of the outer lower portion 355 of the base portion 35 allows to obtain another degree of oscillation which helps to further reduce the vibration of the lawnmower.

As for the operation of the lawnmower, the head 21 preloads the upper elastic membrane 310 by pushing it downwards inside the upper cavity 311. When the motor is operating and the cutting blades rotate, the lawnmower moves on the ground, a series of vibrations are introduced which are dampened by the multiplicity of anti-vibration fixing means 1 of the present invention, making the upper elastic membrane 310 oscillate vertically and transversely thus deforming the upper cavity 311, making the vertical and transverse dimensions of the lower cavity 315 and the vertical and transverse dimensions of the lower portion of the inner wall 325 and the vertical and transverse dimensions of the outer lower portion 355 of the base portion 35 oscillate. Advantageously, the vibrations of the lawnmower from all directions are synergistically reduced by cushioning them.

Alternatively, said damping viscoelastic element 3 comprises a median portion 32 adapted to be engaged from the outer side with said flange 202 of the means for supporting the motor 200.

Alternatively, it is possible to provide that said damping viscoelastic element 3 comprises a multiplicity of upper cavities 311 arranged below the upper elastic membrane 310.

Alternatively again, it is possible to provide that the upper cavity 311 is closed, i.e., it does not communicate with the through opening 300 of the damping viscoelastic element 3. In said alternative, the upper cavity 311 is closed by inner walls thereof.

A further alternative provides that the lower cavity 315 be closed, i.e., it does not communicate with the through opening 300 of the damping viscoelastic element 3. In said alternative, the lower cavity 315 is closed by inner walls thereof.

Advantageously, the damping viscoelastic element 3 is in one piece and allows to advantageously reduce mounting times and significantly simplifies the assembly, making the lawnmower with anti-vibration fixing means more solid and lasting.

Advantageously, the lawnmower according to the present invention is more simple, is capable of dampening vibrations simultaneously originating from all directions, with much shorter response times, so as to allow to dampen rapid vibrations originating from different directions, is easily assembled, more solid and lasting.

## Claims

1. Lawnmower comprising a motor, a cutting blade and a deck (100), said motor is suitable for putting said cutting blade in motion, said motor is integrally mounted with means for supporting the motor (200) of the lawnmower, said means for supporting the motor (200) are mounted on the deck (100) by means of a multiplicity of anti-vibration fixing means (1) of the lawnmower, said multiplicity of anti-vibration fixing means (1) are adapted to support said means for supporting the motor (200), said means for supporting the motor (200) comprise a multiplicity of upper through openings (201), said deck (100) comprises a multiplicity of lower through openings (101) arranged below and in correspondence with said multiplicity of upper through openings (201) of said means for supporting the motor (200), each one anti-vibration fixing means (1) of said multiplicity of anti-vibration fixing means (1) is adapted to pass through one upper through opening (201) of said multiplicity of upper through openings (201) and through one lower through opening (101) of said multiplicity of lower through openings (101), each one of anti-vibration fixing means (1) comprises engagement means (2) and a damping viscoelastic element (3), said engagement means (2) comprise a head (21) and a pin (22) pointing downwards, said damping viscoelastic element (3) comprises a through opening (300) adapted to allow said pin (22) of the engagement means (2) to pass through, said pin (22) of the engagement means (2) is adapted to pass through said lower through opening (101) of the deck (100), said upper through opening (201) of the means for supporting the motor (200) comprises a flange (202) pointing downwards, said damping viscoelastic element (3) is adapted to be engaged with said flange (202) of the means for supporting the motor (200), said damping viscoelastic element (3) comprises a base portion (35) which contrasts with said deck (100) so that said damping viscoelastic element (3) is adapted to support said means for supporting the motor (200) resting on said deck (100), **characterized in that** said damping viscoelastic element (3) comprises an upper portion (31) extending upward above the through opening (201) of the means for supporting the motor (200), said upper portion (31) of the damping viscoelastic element (3) climbs over the flange (202) of the through opening (201) of the means for supporting the motor (200) defining an outer diameter of the upper portion (31) of the damping viscoelastic element (3) larger than the diameter of the upper through opening (201) of the means for supporting the motor (200), said upper portion (31) of the damping viscoelastic element (3) comprises an upper through opening (301) adapted to allow the pin (22) of the engagement means (2) to pass through and an upper elastic membrane (310) adapted to serve as abutment for the head (21) of the engagement means (2), said damping viscoelastic element (3) comprises at least one upper cavity (311) arranged below the upper elastic membrane (310), said upper elastic membrane (310) is adapted to be deformed vertically along a vertical axis (V) passing from at least one first vertical position to at least one second vertical position of a multiplicity of vertical positions wherein said upper elastic membrane (310) oscillates deforming the upper cavity (311) dampening vertical vibrations, said upper elastic membrane (310) is adapted to be deformed transversely with respect to the vertical axis (V) passing from at least one first transversal position to at least one second transversal position of a multiplicity of transversal positions wherein said upper elastic membrane (310) oscillates deforming the upper cavity (311) about the vertical axis (V) dampening transversal vibrations.

2. Lawnmower according to the claim 1, **characterized in that** said damping viscoelastic element (3) comprises a median portion (32) comprising a median through opening (302) in correspondence with said upper through opening (201) of the means for supporting the motor (200), said median through opening (302) has a diameter larger than the pin (22) of the engagement means (2), said median portion (32) is adapted to be engaged with said flange (202) of the means for supporting the motor (200).

3. Lawnmower according to the claim 2, **characterized in that** said upper cavity (311) is comprised between the upper through opening (301) of the damping viscoelastic element (3) and the median through opening (302) of the damping viscoelastic element (3), said upper cavity (311) is defined by the upper elastic membrane (310) and by an upper portion of an inner wall (321) of the damping viscoelastic element (3), said upper cavity (311) communicates with the through opening (300) of the damping viscoelastic element (3).

4. Lawnmower according to anyone of the claims 1-3, **characterized in that** said base portion (35) of said damping viscoelastic element (3) comprises a lower cavity (315), said lower cavity (315) is comprised between the upper through opening (201) of the means for supporting the motor (200) and said lower through opening (101) of the deck (100), said lower cavity (315) is adapted to be deformed vertically along the vertical axis (V) passing from at least one first vertical position to at least one second vertical position of a multiplicity of vertical positions wherein said lower cavity (315) varies its vertical dimension along the vertical axis (V) dampening vertical vibrations, said lower cavity (315) is adapted to be deformed transversely with respect to the vertical axis (V) passing from at least one first transversal position to at least one second transversal position of a multiplicity of transversal positions wherein said lower cavity (315) deforms its transversal direction and oscillates about the vertical axis (V) dampening transversal vibrations.

5. Lawnmower according to the claim 4, **characterized in that** said lower cavity (315) is comprised between the median through opening (302) of the damping viscoelastic element (3) and a lower through opening (305) of the damping viscoelastic element (3), wherein said lower through opening (305) of the damping viscoelastic element (3) is in correspondence with the lower through opening (101) of the deck (100), said lower cavity (315) is defined on the top by the upper through opening (302) of the damping viscoelastic element (3), on the bottom by the lower through opening (305) of the damping viscoelastic element (3) and by a lower portion of the inner wall (325) of the damping viscoelastic element (3).

6. Lawnmower according to the claim 5, **characterized in that** said lower portion of the inner wall (325) of the damping viscoelastic element (3) has an inner diameter which narrows toward the direction of the lower through opening (101) of the deck (100), lower portion of the inner wall (325) is adapted to be deformed vertically along the vertical axis (V) passing from at least one first vertical position to at least one second vertical position of a multiplicity of vertical positions wherein said lower portion of the inner wall (325) varies its vertical dimension along the vertical axis (V) dampening vertical vibrations, said lower portion of the inner wall (325) is adapted to be deformed transversely with respect to the vertical axis (V) passing from at least one first transversal position to at least one second transversal position of a multiplicity of transversal positions wherein said lower portion of the inner wall (325) deforms its transversal dimension and oscillates about the vertical axis (V) dampening transversal vibrations.

7. Lawnmower according to anyone of the claims 5 or 6, **characterized in that** said lower portion of the inner wall (325) of the damping viscoelastic element (3) has an inner diameter which narrows toward the direction of the upper through opening (201) of the means for supporting the motor (200), said lower portion of the inner wall (325) is adapted to be deformed vertically along the vertical axis (V) passing from at least one first vertical position to at least one second vertical position of a multiplicity of vertical positions wherein said lower portion of the inner wall (325) varies its vertical dimension along the vertical axis (V) dampening vertical vibrations, said lower portion of the inner wall (325) is adapted to be deformed transversely with respect to the vertical axis (V) passing from at least one first transversal position to at least one second transversal position of a multiplicity of transversal positions wherein said lower portion of the inner wall (325) deforms its transversal dimension and oscillates about the vertical axis (V) dampening transversal vibrations.

8. Lawnmower according to anyone of the claims 1-7, **characterized in that** an outer lower portion (355) of the base portion (35) has an outer diameter which narrows toward the direction of the lower through opening (101) of the deck (100), said outer lower portion (355) of the base portion (35) is adapted to be deformed vertically along the vertical axis (V) passing from at least one first vertical position to at least one second vertical position of a multiplicity of vertical positions wherein said outer lower portion (355) varies its vertical dimension along the vertical axis (V) dampening vertical vibrations, said outer lower portion (355) is adapted to be deformed transversely with respect to the vertical axis (V) passing from at least one first transversal position to at least one second transversal position of a multiplicity of transversal positions wherein said outer lower portion (355) deforms its transversal dimension and oscillates about the vertical axis (V) dampening transversal vibrations.

## Patentansprüche

1. Rasenmäher mit einem Motor, einem Schneidmesser und einem Aufbau (100), wobei der Motor geeignet ist, das Schneidmesser in Bewegung zu versetzen, wobei der Motor in integraler Weise mit Einrichtungen zum Abstützen des Motors (200) des Rasenmähers angebracht ist, wobei die Einrichtungen zum Abstützen des Motors (200) an dem Aufbau (100) mittels einer Mehrzahl von schwingungsdämpfenden Befestigungseinrichtungen (1) des Rasenmähers angebracht sind, wobei die Mehrzahl von schwingungsdämpfenden Befestigungseinrichtungen (1) dazu ausgebildet sind, die Einrichtungen zum Abstützen des Motors (200) abzustützen, wobei die Einrichtungen zum Abstützen des Motors (200) eine Mehrzahl von oberen Durchgangsöffnungen (201) aufweisen und der Aufbau (100) eine Mehrzahl von unteren Durchgangsöffnungen (101) aufweist, die unterhalb und in Entsprechung zu der Mehrzahl von oberen Durchgangsöffnungen (201) der Einrichtungen zum Abstützen des Motors (200) angeordnet sind, wobei jede schwingungsdämpfende Befestigungseinrichtung (1) der Mehrzahl von schwingungsdämpfenden Befestigungseinrichtungen (1) dazu ausgebildet ist, sich durch eine obere Durchgangsöffnung (201) der Mehrzahl von oberen Durchgangsöffnungen (201) und durch eine untere Durchgangsöffnung (101) der Mehrzahl von unteren Durchgangsöffnungen (101) hindurch zu erstrecken, wobei jede schwingungsdämpfende Befestigungseinrichtung (1) eine Eingriffseinrichtung (2) und ein viskoelastisches Dämpfungselement (3) aufweist, wobei die Eingriffseinrichtungen (2) einen Kopf (21) und einen nach unten gerichteten Stift (22) aufweisen, wobei das viskoelastische Dämpfungselement (3) eine Durchgangsöffnung (300) aufweist, durch die sich der Stift (22) der Eingriffseinrichtung (2) hindurch erstrecken kann, wobei der Stift (22) der Eingriffseinrichtung (2) dazu ausgebildet ist, sich durch die untere Durchgangsöffnung (101) des Aufbaus (100) hindurch zu erstrecken, wobei die obere Durchgangsöffnung (201) der Einrichtung zum Abstützen des Motors (200) einen nach unten gerichteten Flansch (202) aufweist, wobei das viskoelastische Dämpfungselement (3) dazu ausgebildet ist, mit dem Flansch (202) der Einrichtung zum Abstützen des Motors (200) zusammenzuwirken, wobei das viskoelastische Dämpfungselement (3) einen Basisbereich (35) aufweist, der dem Aufbau (100) gegenüberliegt, so dass das viskoelastische Dämpfungselement (3) zum Abstützen der Einrichtung zum Abstützen des auf dem Aufbau (100) aufliegenden Motors (200) in der Lage ist,
**dadurch gekennzeichnet, dass** das viskoelastische Dämpfungselement (3) einen oberen Bereich (31) aufweist, der sich oberhalb der Durchgangsöffnung (201) der Einrichtung zum Abstützen des Motors (200) nach oben erstreckt, wobei der obere Bereich (31) des viskoelastischen Dämpfungselements (3) sich über den Flansch (202) der Durchgangsöffnung (201) der Einrichtung zum Abstützen des Motors (200) hinaus erstreckt und dabei einen Außendurchmesser des oberen Bereichs (31) des viskoelastischen Dämpfungselements (3) bildet, der größer ist als der Durchmesser der oberen Durchgangsöffnung (201) der Einrichtung zum Abstützen des Motors (200), wobei der obere Bereich (31) des viskoelastischen Dämpfungselements (3) eine obere Durchgangsöffnung (301) aufweist, durch die sich der Stift (22) der Eingriffseinrichtung (2) hindurch erstrecken kann, sowie eine obere elastische Membran (310) aufweist, die dazu ausgebildet ist, als Anschlag für den Kopf (21) der Eingriffseinrichtung (2) zu dienen, wobei das viskoelastische Dämpfungselement (3) mindestens einen oberen Hohlraum (311) aufweist, der unterhalb der oberen elastischen Membran (310) angeordnet ist, wobei die obere elastische Membran (310) derart ausgebildet ist, dass sie vertikal entlang einer vertikalen Achse (V) verformt werden kann und dabei mindestens eine erste vertikale Position bis zu mindestens einer zweiten vertikalen Position einer Mehrzahl von vertikalen Positionen durchläuft, in denen die obere elastische Membran (310) unter Verformung des oberen Hohlraums (311) schwingt und dadurch vertikale Schwingungen dämpft, wobei die obere elastische Membran (310) dazu ausgebildet ist, dass sie quer zu der vertikalen Achse (V) verformt werden kann und dabei mindestens eine erste transversale Position bis zu mindestens einer zweiten transversalen Position einer Mehrzahl von transversalen Positionen durchläuft, in denen die obere elastische Membran (310) schwingt und dabei den oberen Hohlraum (311) um die vertikale Achse (V) verformt, wodurch transversale Schwingungen gedämpft werden.

2. Rasenmäher nach Anspruch 1,
**dadurch gekennzeichnet, dass** das viskoelastische Dämpfungselement (3) einen mittleren Bereich (32) aufweist, der eine mittlere Durchgangsöffnung (302) in Entsprechung zu der oberen Durchgangsöffnung (201) der Einrichtungen zum Abstützen des Motors (200) aufweist, wobei die mittlere Durchgangsöffnung (302) einen größeren Durchmesser aufweist als der Stift (22) der Eingriffseinrichtung (2), und wobei der mittlere Bereich (32) dazu ausgebildet ist, mit dem Flansch (202) der Einrichtung zum Abstützen des Motors (200) zusammenzuwirken.

3. Rasenmäher nach Anspruch 2,
**dadurch gekennzeichnet, dass** der obere Hohlraum (311) zwischen der oberen Durchgangsöffnung (301) des viskoelastischen Dämpfungselements (3) und der mittleren Durchgangsöffnung (302) des viskoelastischen Dämpfungselements (3) gebildet ist, wobei der obere Hohlraum (311) durch die obere elastische Membran (310) und durch einen oberen Bereich einer Innenwand (321) des viskoelastischen Dämpfungselements (3) gebildet ist, und wobei der obere Hohlraum (311) mit der Durchgangsöffnung (300) des viskoelastischen Dämpfungselements (3) in Verbindung steht.

4. Rasenmäher nach einem der Ansprüche 1 bis 3,
**dadurch gekennzeichnet, dass** der Basisbereich (35) des viskoelastischen Dämpfungselements (3) einen unteren Hohlraum (315) aufweist, wobei der untere Hohlraum (315) zwischen der oberen Durchgangsöffnung (201) der Einrichtung zum Abstützen des Motors (200) und der unteren Durchgangsöffnung (101) des Aufbaus (100) gebildet ist, wobei der untere Hohlraum (315) derart ausgebildet ist, dass er vertikal entlang der vertikalen Achse (V) verformt werden kann und dabei mindestens eine erste vertikale Position bis zu mindestens einer zweiten vertikalen Position einer Mehrzahl von vertikalen Positionen durchläuft, in denen der untere Hohlraum (315) in seiner vertikalen Abmessung entlang der vertikalen Achse (V) variiert und dadurch vertikale Schwingungen dämpft, wobei der untere Hohlraum (315) derart ausgebildet ist, dass er quer zu der vertikalen Achse (V) verformt werden kann und dabei mindestens eine erste transversale Position bis zu mindestens einer zweiten transversalen Position einer Mehrzahl von transversalen Positionen durchläuft, in denen der untere Hohlraum (315) in seiner transversalen Richtung verformt wird und um die vertikale Achse (V) schwingt, um transversale Schwingungen zu dämpfen.

5. Rasenmäher nach Anspruch 4,
**dadurch gekennzeichnet, dass** der untere Hohlraum (315) zwischen der mittleren Durchgangsöffnung (302) des viskoelastischen Dämpfungselements (3) und einer unteren Durchgangsöffnung (305) des viskoelastischen Dämpfungselements (3) gebildet ist, wobei die untere Durchgangsöffnung (305) des viskoelastischen Dämpfungselements (3) in Entsprechung zu der unteren Durchgangsöffnung (101) des Aufbaus (100) angeordnet ist, wobei der untere Hohlraum (315) oben durch die obere Durchgangsöffnung (302) des viskoelastischen Dämpfungselements (3) gebildet ist und unten durch die untere Durchgangsöffnung (305) des viskoelastischen Dämpfungselements (3) und durch einen unteren Bereich der Innenwand (325) des viskoelastischen Dämpfungselements (3) gebildet ist.

6. Rasenmäher nach Anspruch 5,
**dadurch gekennzeichnet, dass** der untere Bereich der Innenwand (325) des viskoelastischen Dämpfungselements (3) einen Innendurchmesser aufweist, der sich in Richtung der unteren Durchgangsöffnung (101) des Aufbaus (100) verengt, wobei der untere Bereich der Innenwand (325) derart ausgebildet, dass er vertikal entlang der vertikalen Achse (V) verformt werden kann und dabei mindestens eine erste vertikale Position bis zu mindestens einer zweiten vertikalen Position einer Mehrzahl von vertikalen Positionen durchläuft, in denen der untere Bereich der Innenwand (325) in seiner vertikalen Abmessung entlang der vertikalen Achse (V) variiert und dadurch vertikale Schwingungen dämpft, wobei der untere Bereich der Innenwand (325) derart ausgebildet ist, dass er quer zu der vertikalen Achse (V) verformt werden kann und dabei mindestens eine erste transversale Position bis zu mindestens einer zweiten transversalen Position einer Mehrzahl von transversalen Positionen durchläuft, in denen der untere Bereich der Innenwand (325) in seiner transversalen Abmessung verformt wird und um die vertikale Achse (V) schwingt und dadurch transversale Schwingungen dämpft.

7. Rasenmäher nach einem der Ansprüche 5 oder 6,
**dadurch gekennzeichnet, dass** der untere Bereich der Innenwand (325) des viskoelastischen Dämpfungselements (3) einen Innendurchmesser aufweist, der sich in Richtung der oberen Durchgangsöffnung (201) der Einrichtung zum Abstützen des Motors (200) verengt, wobei der untere Bereich der Innenwand (325) derart ausgebildet ist, dass er vertikal entlang der vertikalen Achse (V) verformt werden kann und dabei mindestens eine erste vertikale Position bis zu mindestens einer zweiten vertikalen Position einer Mehrzahl von vertikalen Positionen durchläuft, in denen der untere Bereich der Innenwand (325) in seiner vertikalen Abmessung entlang der vertikalen Achse (V) variiert und dadurch vertikale Schwingungen dämpft, wobei der untere Bereich der Innenwand (325) derart ausgebildet ist, dass er quer zu der vertikalen Achse (V) verformt werden kann und dabei mindestens eine erste transversale Position bis zu mindestens einer zweiten transversalen Position einer Mehrzahl von transversalen Positionen durchläuft, in denen der untere Bereich der Innenwand (325) in seiner transversalen Abmessung verformt wird und um die vertikale Achse (V) schwingt und dadurch transversale Schwingungen dämpft.

8. Rasenmäher nach einem der Ansprüche 1 bis 7,
**dadurch gekennzeichnet, dass** ein äußerer unterer Bereich (355) des Basisbereichs (35) einen Außendurchmesser aufweist, der sich in Richtung der unteren Durchgangsöffnung (101) des Aufbaus (100) verengt, wobei der äußere untere Bereich (355) des Basisbereichs (35) derart ausgebildet ist, dass er vertikal entlang der vertikalen Achse (V) verformt werden kann und dabei mindestens eine erste vertikale Position bis zu mindestens einer zweiten vertikalen Position einer Mehrzahl von vertikalen Positionen durchläuft, in denen der äußere untere Bereich (355) in seiner vertikalen Abmessung entlang der vertikalen Achse (V) variiert und dadurch vertikale Schwingungen dämpft, wobei der äußere untere Bereich (355) derart ausgebildet ist, dass er quer zu der vertikalen Achse (V) verformt werden kann und dabei mindestens eine erste transversale Position bis zu mindestens einer zweiten transversalen Position einer Mehrzahl von transversalen Positionen durchläuft, in denen der äußere untere Bereich (355) in seiner transversalen Abmessung verformt wird und um die vertikale Achse (V) schwingt und dadurch transversale Schwingungen dämpft.

## Revendications

1. Tondeuse à gazon comprenant un moteur, une lame de coupe et un pont (100), ledit moteur est approprié pour mettre ladite lame de coupe en mouvement, ledit moteur est monté, de manière solidaire, avec des moyens pour supporter le moteur (200) de la tondeuse à gazon, lesdits moyens de support de moteur (200) sont montés sur le pont (100) au moyen d'une pluralité de moyens de fixation anti-vibration (1) de la tondeuse à gazon, ladite pluralité de moyens de fixation anti-vibration (1) sont adaptés pour supporter lesdits moyens de support de moteur (200), lesdits moyens de support de moteur (200) comprennent une pluralité d'ouvertures débouchantes supérieures (201), ledit pont (100) comprend une pluralité d'ouvertures débouchantes inférieures (101) agencées au-dessous et en correspondance avec ladite pluralité d'ouvertures débouchantes supérieures (201) desdits moyens de support de moteur (200), chaque moyen de fixation anti-vibration (1) de ladite pluralité de moyens de fixation anti-vibration (1) est adapté pour traverser une ouverture débouchante supérieure (201) de ladite pluralité d'ouvertures débouchantes supérieures (201) et traverser une ouverture débouchante inférieure (101) de ladite pluralité d'ouvertures débouchantes inférieures (101), chacun des moyens de fixation anti-vibration (1) comprend des moyens de mise en prise (2) et un élément viscoélastique amortissant (3), lesdits moyens de mise en prise (2) comprennent une tête (21) et une broche (22) pointant vers le bas, ledit élément viscoélastique amortissant (3) comprend une ouverture débouchante (300) adaptée pour permettre à ladite broche (22) des moyens de mise en prise (2) de passer à travers, ladite broche (22) des moyens de mise en prise (2) est adaptée pour passer à travers ladite ouverture débouchante inférieure (101) du pont (100), ladite ouverture débouchante supérieure (201) des moyens de support de moteur (200) comprend une bride (202) pointant vers le bas, ledit élément viscoélastique amortissant (3) est adapté pour être mis en prise avec ladite bride (202) des moyens de support de moteur (200), ledit élément viscoélastique amortissant (3) comprend une partie de base (35) qui contraste avec ledit pont (100) de sorte que ledit élément viscoélastique amortissant (3) est adapté pour supporter lesdits moyens de support de moteur (200) s'appuyant sur ledit pont (100), **caractérisée en ce que** ledit élément viscoélastique amortissant (3) comprend une partie supérieure (31) s'étendant vers le haut au-dessus de l'ouverture débouchante (201) des moyens de support de moteur (200), ladite partie supérieure (31) de l'élément viscoélastique amortissant (3) monte sur la bride (202) de l'ouverture débouchante (201) des moyens de support de moteur (200) définissant un diamètre externe de la partie supérieure (31) de l'élément viscoélastique amortissant (3) supérieur au diamètre de l'ouverture débouchante supérieure (201) des moyens de support de moteur (200), ladite partie supérieure (31) de l'élément viscoélastique amortissant (3) comprend une ouverture débouchante supérieure (301) adaptée pour permettre à la broche (22) des moyens de mise en prise (2) de passer à travers et une membrane élastique supérieure (310) adaptée pour servir de butée pour la tête (21) des moyens de mise en prise (2), ledit élément viscoélastique amortissant (3) comprend au moins une cavité supérieure (311) agencée au-dessous de la membrane élastique supérieure (310), ladite membrane élastique supérieure (310) est adaptée pour être déformée verticalement le long d'un axe vertical (V) passant d'au moins une première position verticale à au moins une seconde position verticale d'une pluralité de positions verticales, dans laquelle ladite membrane élastique supérieure (310) oscille, déformant la cavité supérieure (311) amortissant les vibrations verticales, ladite membrane élastique supérieure (310) est adaptée pour être transversalement déformée par rapport à l'axe vertical (V) passant d'au moins une première position transversale à au moins une seconde position transversale d'une pluralité de positions transversales, dans laquelle ladite membrane élastique supérieure (310) oscille, déformant la cavité supérieure (311) autour de l'axe vertical (V) amortissant les vibrations transversales.

2. Tondeuse à gazon selon la revendication 1, **caractérisée en ce que** ledit élément viscoélastique amortissant (3) comprend une partie médiane (32) comprenant une ouverture débouchante médiane (302) en correspondance avec ladite ouverture débouchante supérieure (201) des moyens de support de moteur (200), ladite ouverture débouchante médiane (302) a un diamètre supérieur à la broche (22) des moyens de mise en prise (2), ladite partie médiane (32) est adaptée pour être mise en prise avec ladite bride (202) des moyens de support de moteur (200).

3. Tondeuse à gazon selon la revendication 2, **caractérisée en ce que** ladite cavité supérieure (311) est comprise entre l'ouverture débouchante supérieure (301) de l'élément viscoélastique amortissant (3) et l'ouverture débouchante médiane (302) de l'élément viscoélastique amortissant (3), ladite cavité supérieure (311) est définie par la membrane élastique supérieure (310) et par une partie supérieure d'une paroi interne (321) de l'élément viscoélastique amortissant (3), ladite cavité supérieure (311) communique avec l'ouverture débouchante (300) de l'élément viscoélastique amortissant (3).

4. Tondeuse à gazon selon l'une quelconque des revendications 1 à 3, **caractérisée en ce que** ladite partie de base (35) dudit élément viscoélastique amortissant (3) comprend une cavité inférieure (315), ladite cavité inférieure (315) est comprise entre l'ouverture débouchante supérieure (201) des moyens de support de moteur (200) et ladite ouverture débouchante inférieure (101) du pont (100), ladite cavité inférieure (315) est adaptée pour être déformée verticalement le long de l'axe vertical (V) passant d'au moins une première position verticale à au moins une seconde position verticale d'une pluralité de positions verticales, dans laquelle ladite cavité inférieure (315) modifie sa dimension verticale le long de l'axe vertical (V) amortissant les vibrations verticales, ladite cavité inférieure (315) est adaptée pour être déformée transversalement par rapport à l'axe vertical (V) passant d'au moins une première position transversale à au moins une seconde position transversale d'une pluralité de positions transversales, dans laquelle ladite cavité inférieure (315) déforme sa direction transversale et oscille autour de l'axe vertical (V) amortissant les vibrations transversales.

5. Tondeuse à gazon selon la revendication 4, **caractérisée en ce que** ladite cavité inférieure (315) est comprise entre l'ouverture débouchante médiane (302) de l'élément viscoélastique amortissant (3) et une ouverture débouchante inférieure (305) de l'élément viscoélastique amortissant (3), dans laquelle ladite ouverture débouchante inférieure (305) de l'élément viscoélastique amortissant (3) est en correspondance avec l'ouverture débouchante inférieure (101) du pont (100), ladite cavité inférieure (315) est définie sur le dessus par l'ouverture débouchante supérieure (302) de l'élément viscoélastique amortissant (3), sur le fond par l'ouverture débouchante inférieure (305) de l'élément viscoélastique amortissant (3) et par une partie inférieure de la paroi interne (325) de l'élément viscoélastique amortissant (3).

6. Tondeuse à gazon selon la revendication 5, **caractérisé en ce que** ladite partie inférieure de la paroi interne (325) de l'élément viscoélastique amortissant (3) a un diamètre interne qui se rétrécit vers la direction de l'ouverture débouchante inférieure (101) du pont (100), la partie inférieure de la paroi interne (325) est adaptée pour être déformée verticalement le long de l'axe vertical (V) passant d'au moins une première position verticale à au moins une seconde position verticale d'une pluralité de positions verticales, dans laquelle ladite partie inférieure de la paroi interne (325) modifie sa dimension verticale le long de l'axe vertical (V) amortissant les vibrations verticales, ladite partie inférieure de la paroi interne (325) est adaptée pour être déformée transversalement par rapport à l'axe vertical (V) passant d'au moins une première position transversale à au moins une seconde position transversale d'une pluralité de positions transversales, dans laquelle ladite partie inférieure de la paroi interne (325) déforme sa dimension transversale et oscille autour de l'axe vertical (V) amortissant les vibrations transversales.

7. Tondeuse à gazon selon l'une quelconque des revendications 5 ou 6, **caractérisée en ce que** ladite partie inférieure de la paroi interne (325) de l'élément viscoélastique amortissant (3) a un diamètre interne qui se rétrécit vers la direction de l'ouverture débouchante supérieure (201) des moyens de support de moteur (200), ladite partie inférieure de la paroi interne (325) est adaptée pour être déformée verticalement le long de l'axe vertical (V) passant d'au moins une première position verticale à au moins une seconde position verticale d'une pluralité de positions verticales, dans laquelle ladite partie inférieure de la paroi interne (325) modifie sa dimension verticale le long de l'axe vertical (V) amortissant les vibrations verticales, ladite partie inférieure de la paroi interne (325) est adaptée pour être déformée transversalement par rapport à l'axe vertical (V) passant d'au moins une première position transversale à au moins une seconde position transversale d'une pluralité de positions transversales, dans laquelle ladite partie inférieure de la paroi interne (325) déforme sa dimension transversale et oscille autour de l'axe vertical (V) amortissant les vibrations transversales.

8. Tondeuse à gazon selon l'une quelconque des revendications 1 à 7, **caractérisée en ce qu'**une partie inférieure externe (355) de la partie de base (35) a un diamètre externe qui se rétrécit vers la direction de l'ouverture débouchante inférieure (101) du pont (100), ladite partie inférieure externe (355) de la partie de base (35) est adaptée pour être verticalement déformée le long de l'axe vertical (V) passant d'au moins une première position verticale à au moins une seconde position verticale d'une pluralité de positions verticales, dans laquelle ladite partie inférieure externe (355) modifie sa dimension verticale le long de l'axe vertical (V) amortissant les vibrations verticales, ladite partie inférieure externe (355) est adaptée pour être déformée transversalement par rapport à l'axe vertical (V) passant d'au moins une première position transversale à au moins une seconde position transversale d'une pluralité de positions verticales, dans laquelle ladite partie inférieure externe (355) déforme sa dimension transversale et oscille autour de l'axe vertical (V) amortissant les vibrations transversales.
